# EUROPÄISCHE PATENTSCHRIFT

(11) **EP 0 307 874 B1**
(45) Veröffentlichungstag und Bekanntmachung des Hinweises auf die Patenterteilung: **08.03.1995**
(21) Anmeldenummer: 88114968.6
(22) Anmeldetag: 14.09.1988
(51) Int. Cl.: G02C 7/02

(54) **Verfahren zum Erzeugen einer Kennzeichnung und/oder Markierung auf einer Brillenlinse**
Method for producing a mark on a spectacle lens
Méthode pour former une marque sur des lentilles de lunettes

(30) Priorität: 18.09.1987 DE 3731398
(43) Veröffentlichungstag der Anmeldung: 22.03.1989
(73) Patentinhaber: Firma Carl Zeiss, D-73446 Oberkochen (DE); CARL ZEISS-STIFTUNG HANDELND ALS CARL ZEISS, D-89518 Heidenheim (Brenz) (DE)
(72) Erfinder: Daniels, Erwin, Dr. Dipl.-Phys., D-7080 Aalen (DE); Schürle, Hermann, Ing. grad., D-7080 Aalen (DE)

(56) Entgegenhaltungen:
- EP-B- 0 103 217
- US-A- 3 657 085
- US-A- 4 194 814
- US-A- 4 219 721
- PATENT ABSTRACTS OF JAPAN, Band 7, Nr. 64 (P-183)[1209], 17. März 1983 ; & JP-A-57 210 317
- "Glass Marking" in Lambda Highlights Nr.1, 10, 1986
- "UV Laser Ablation of polymers and Biological Tissues" in Lambda Highlights Nr.1, 10, 1986

## Beschreibung

Die vorliegende Erfindung betrifft ein Verfahren zum Erzeugen einer Kennzeichnung und/oder Markierung auf einer Brillenlinse.

Brillenlinsen sind meist mit einer Kennzeichnung versehen, aus welcher der Hersteller hervorgeht. Das ist insbesondere für Reklamationen wichtig, die evtl. erst nach einer gewissen Benutzungszeit erfolgen. Daher müssen derartige Kennzeichnungen auf den Brillenlinsen selbst in dauerhafter Form angebracht sein. Auf der anderen Seite sollen sie aber den Brillenträger bei der normalen Benutzung der Brille nicht stören.

Bei nichtrotationssymmetrischen Brillenlinsen (z.B. Gleitsichtlinsen, torischen Linsen) ist es außerdem notwendig, die Brillenlinsen mit Markierungen zu versehen, die dem Augenoptiker eine Kontrolle für das einwandfreie Einpassen der Brillenlinsen in das Brillengestell ermöglichen. Derartige Markierungen sollen natürlich ebenfalls den Brillenträger nicht stören.

Es ist bekannt, Kennzeichnungen und/oder Markierungen durch sehr feine mechanische Gravuren auf den Brillenlinsen anzubringen. Dieses Vefahren ist recht aufwendig und teuer. Es ist ferner bekannt, Ätzzeichen durch Herauslaugen von Glasbestandteilen herzustellen. Da hierfür vorher alle übrigen Teile der Brillenlinse mit einem Lack o.ä. abgedeckt werden müssen, der später wieder entfernt wird, ist auch dieses Verfahren sehr aufwendig. Schließlich sind sog. Hauchzeichen bekannt, bei denen gewisse Substanzen mit Stempeln in Form der Kennzeichnungen und/oder Markierungen auf die Brillenlinsen gebracht werden und dadurch eine unterschiedliche Benetzbarkeit gegenüber der übrigen Oberfläche der Brillenlinse ergeben.

Dabei können die Kennzeichnungen und/oder Markierungen durch Anhauchen für kurze Zeit sichtbar gemacht werden. Ihr Nachteil liegt in der begrenzten Haltbarkeit. Allen aufgeführten Verfahren ist gemeinsam, daß sie sehr sorgfältig, d.h. mit relativ viel Aufwand, ausgeführt werden müssen, damit einerseits eine genügend gute Sichtbarkeit für den Augenoptiker erreicht wird und andererseits der Brillenträger davon nicht gestört wird. Diese einander ziemlich widersprechenden Forderungen lassen sich nur durch die Einhaltung von engen Toleranzen erreichen.

Derartige enge Toleranzen werden technisch noch am besten beherrscht durch ein ebenfalls bekanntes Verfahren, bei dem geeignete Substanzen auf die Brillenlinsen mit Hilfe von Masken oder Schablonen aufgedampft werden. Die Masken oder Schablonen sind dabei in Form der Kennzeichnung und/oder Markierung ausgespart, so daß die Substanz nur in der Form der Kennzeichnung und/oder Markierung auf die Brillenlinse gelangt. Bei Schablonen, die in einem wenn auch geringen Abstand vor den Brillenlinsen angeordnet werden, tritt jedoch der Nachteil auf, daß die Kennzeichnungen und/oder Markierungen nicht richtig randscharf werden.

Aus der EP-B1-0 103 217 ist eine Brillenlinse mit einer reflexvermindernden Schicht bekannt, bei der die Kennzeichnung und/oder Markierung in Form von mindestens einem in der reflexvermindernden Schicht ausgesparten Bereich enthalten ist. Dazu wird auf die Brillenlinse eine abwischbar haftende Substanz in dem für die Kennzeichnung und/oder Markierung auszusparenden Bereich aufgebracht. Anschließend wird die reflexvermindernde Schicht auf die gesamte Brillenlinse aufgedampft. Zu einem späteren Zeitpunkt wird die abwischbar haftende Substanz einschließlich der auf sie aufgebrachten reflexvermindernden Schicht abgewischt.

Dieses Verfahren hat den Nachteil, daß es nur bei Brillenlinsen mit reflexvermindernden Schichten angewendet werden kann und daß die abwischbar haftende Substanz mit Sorgfalt und daher bei großen Stückzahlen mit verhältnismäßig großem Aufwand aufgebracht werden muß.

Aus dem Artikel "Glass Marking" in der Firmendruckschrift "Highlights" 10′86 der Firma Lambdaphysics ist eine Verfahren zur Markierung von Glasoberflächen bekannt, bei dem in 15 einzelnen Abtragungsschritten mithilfe eines Excimer-Lasers eine Schicht von insgesamt 1,5 »m in Form der Markierung abgetragen wird.

Der vorliegenden Erfindung liegt daher die Aufgabe zugrunde, ein Verfahren anzugeben, mit dem bei Brillenlinsen mit oder ohne reflexvermindernden Schichten mit möglichst geringem Aufwand eine Kennzeichnung und/oder Markierung erzeugt werden kann, welche hohen Anforderungen an ihren Eigenschaften entspricht.

Die gestellte Aufgabe wird erfindungsgemäß durch die in den kennzeichnenden Teilen der Ansprüche 1 und 2 gelöst.

Excimer-Laser sind gepulste Gasentladungslaser. Bei ihnen wird ein Gasgemisch (z.B. Argon, Fluor) in einer elektrischen Entladung energetisch aufgeladen und zur Aussendung eines intensiven Laserblitzes veranlaßt.

Es hat sich als vorteilhaft herausgestellt, den Excimer-Laser mit einem Impuls oder mehreren Impulsen und mit einer Wellenlänge von ca. 193 nm zu betreiben. Bei dieser Wellenlänge ist die Eindringtiefe in normale Gläser und Kunststoffe sehr gering. Daher wird die Laserenergie in einer sehr dünnen Oberflächenschicht aufgenommen, die auf eine hohe Temperatur gebracht wird. Dadurch wird von der Oberfläche eine ca. 0,1 »m dünne Schicht verdampft. Die Energie des gepulsten Lasers beträgt dabei zwischen 1 J/cm² und 5 J/cm² und ist von dem verwendeten Glas oder Kunststoff bzw. von der reflexvermindernden Schicht abhängig.

Besonders vorteilhaft ist es, die Brillenlinse durch eine Maske zu bestrahlen, welche die Form der Kennzeichnung und/oder Markierung als Aussparungen enthält. Eine derartige Maske kann auf oder vor der Brillenlinse angeordnet werden, wobei durch die parallele Strahlung des Lasers der Abstand der Maske von der Brillenlinse unkritisch ist.

Noch vorteilhafter ist es, die Maske auf die Oberfläche der Brillenlinse mit einer UV-durchlässigen Optik abzubilden. Wenn diese Abbildung verkleinert erfolgt, erreicht man eine höhere Energiedichte auf der Oberfläche der Brillenlinse und damit eine geringere Anzahl von Impulsen bzw. eine geringere erforderliche Leistung des Lasers.

Wenn die Brillenlinse keine reflexvermindernde Schicht hat, wird durch die Bestrahlung mit dem Excimer-Laser aus der Oberfläche der Brillenlinse eine so geringe Schicht abgetragen, daß die Kennzeichnung und/oder Markierung als Hauchzeichen zu erkennen ist.

Wenn die Brillenlinse eine reflexvermindernde Schicht hat, wird durch die Bestrahlung ein geringer Betrag dieser Schicht abgetragen. Damit wird die Interferenzbedingung gestört und die Kennzeichnung und/oder Markierung ist im reflektierten Licht gut erkennbar, während der Brillenträger selbst nichts bemerkt.

Weitere vorteilhafte Ausgestaltungen der Erfindung gehen aus den Unteransprüchen und aus den Erläuterungen zu den Figuren hervor.

Ein besonderer Vorteil der Erfindung ist, daß sich mit ihr auch die reflexvermindernden Schichten selbst z.B. mit einem Warenzeichen versehen lassen, so daß auch sie vor Nachahmungen geschützt sind. Außerdem können Brillenlinsen mit reflexvermindernden Schichten auch mit Warenzeichen in großer und dekorativer Form versehen werden, die auch für das ungeübte Auge zu erkennen sind, aber trotzdem den Brillenträger nicht stören. Schließlich ist es auch möglich, alle Brillenlinsen, unabhängig davon, ob sie später mit reflexvermindernden Schichten versehen werden, mit Kennzeichnungen und/oder Markierungen zu versehen. Bei denjenigen Brillenlinsen die später mit einer reflexvermindernden Schicht versehen wurden, ist das Hauchzeichen nicht mehr erkennbar. Diese Brillenlinsen können dann nochmals in der reflexvermindernden Schicht mit Kennzeichnungen und/oder Markierungen versehen werden.

Die Erfindung wird im folgenden anhand von in den Figuren 1 bis 4 dargestellten Ausführungsbeispielen näher erläutert. Dabei zeigen:
- Fig. 1: eine Vorrichtung, bei der die Maske dicht vor der Brillenlinse angeordnet ist;
- Fig. 2: eine Vorrichtung, bei der die Maske auf die Brillenlinse abgebildet wird;
- Fig. 3a: eine Maske mit einem Warenzeichen;
- Fig. 3b: einen Schnitt durch die Maske der Fig. 3a längs der Linie IIIb und
- Fig. 4: eine Maske mit Markierungen.

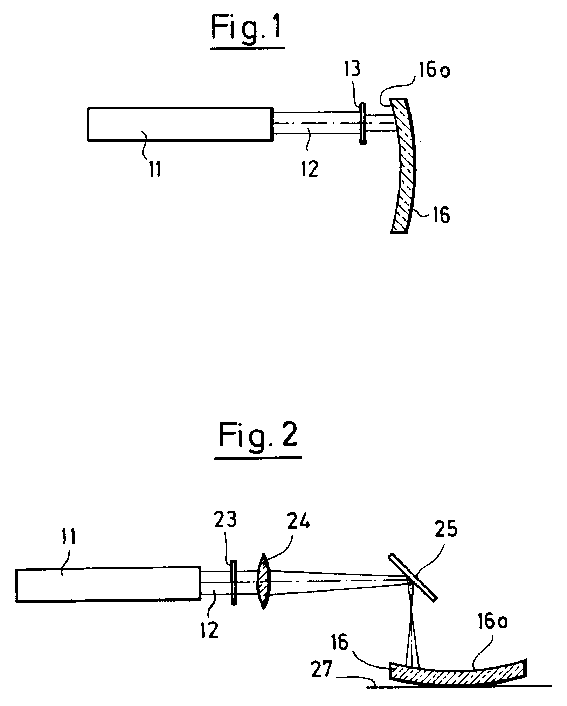

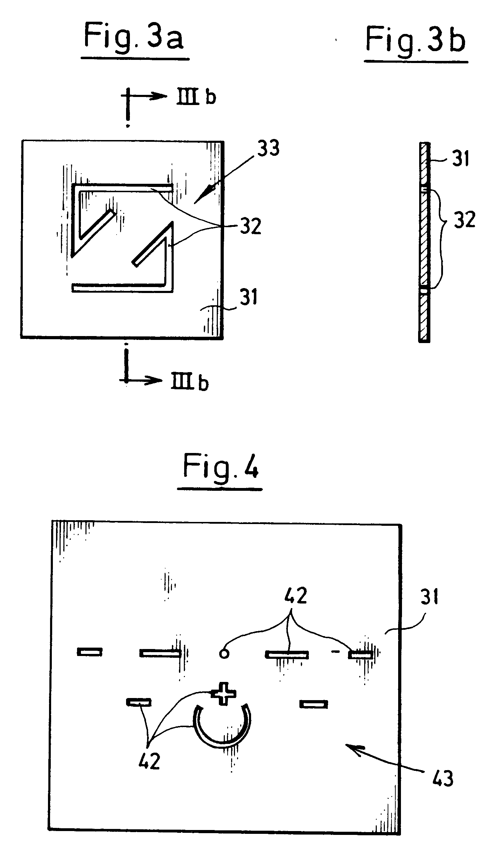

In Figur 1 ist mit (11) ein Excimer-Laser bezeichnet, wie er z.B. von der Firma Lambda Physik unter der Bezeichnung EMG 200 verkauft wird. Das aus diesem Laser austretende parallele Strahlungsbündel (12) fällt auf die Maske (13), für die weiter unten mit den Figuren 3 und 4 Beispiele erläutert werden. Der größte Teil der Strahlung des Lasers wird von der Maske (13) zurückgehalten, nur in denjenigen Bereichen, welche der Form der gewünschten Kennzeichnung und/oder Markierung entsprechen, wird die Strahlung des Lasers von der Maske durchgelassen und fällt auf die Oberfläche (16o) der Brillenlinse (16), wo sie einen geringen Abtrag in Form der gewünschten Kennzeichnung und/oder Markierung bewirkt.

In Figur 2 wird die Maske (23) von der Linse (24) über den Umlenkspiegel (25) auf die Oberfläche (16o) der Brillenlinse (16) abgebildet. Es ist vorteilhaft, die Maske verkleinert, z.B. im Maßstab 1:5, abzubilden, weil dadurch die Energiedichte auf der Oberfläche der Brillenlinse (16) größer wird. Selbst in diesem Fall ist die Tiefenschärfe der Abbildung so groß, daß auch für Brillenlinsen mit unterschiedlichen Krümmungsradien die Auflagefläche (27) unverändert bleiben kann.

Figur 3 zeigt Einzelheiten der Maske (13) oder (23). In einer Platte aus für die Strahlung des Excimer-Lasers undurchlässigem Material (31), z.B. Metall, sind Aussparungen (32) eingearbeitet, die ein Kennzeichen (33) darstellen, in diesem Fall ein stark stilisiertes Z als Warenzeichen.

Figur 4 zeigt eine Maske (13) oder (23), bei der in das strahlungsundurchlässige Material (31) Aussparungen in Form von geometrischen Figuren (42) als Markierung (43) eingearbeitet sind.

## Patentansprüche

1. Verfahren zur Erzeugung einer Kennzeichnung und/oder Markierung auf einer Brillenlinse ohne reflexvermindernder Schicht, wobei Bereiche auf der Oberfläche der Brillenlinse in Form der Kennzeichnung und/oder Markierung mit einem Excimer-Laser bestrahlt werden, dadurch gekennzeichnet, daß aus der Oberfläche (160) der Brillenlinse (16) nur eine so geringe Schicht abgetragen wird, daß die Kennzeichnung (33) und/oder Markierung (43) als Hauchzeichen zu erkennen ist.

2. Verfahren zur Erzeugung einer Kennzeichnung und/oder Markierung auf einer Brillenlinse mit reflexvermindernder Schicht, wobei Bereiche auf der Oberfläche der Brillenlinse in Form der Kennzeichnung und/oder Markierung mit einem Excimer-Laser bestrahlt werden, dadurch gekennzeichnet, daß von der reflexvermindernden Schicht nur ein so geringer Teil abgetragen wird, daß eine derartige Störung der Interferenzbedingung auftritt, daß die Kennzeichnung (33) und/oder Markierung (43) nur im refektierten Licht sichtbar ist.

3. Verfahren nach Anspruch 1 oder 2, dadurch gekennzeichnet, daß die Abtragung der Schicht ca. 0,1 »m beträgt.

4. Verfahren nach einem der Ansprüche 1 bis 3, dadurch gekennzeichnet, daß die Bestrahlung mit einem Impuls oder mehreren Impulsen und mit einer Wellenlänge von ca. 193 nm erfolgt.

5. Verfahren nach einem der Ansprüche 1 bis 4, dadurch gekennzeichnet, daß die Brillenlinse (16) durch eine Maske (13) bestrahlt wird, welche die Form der Kennzeichnung (33) und/oder Markierung (43) als Aussparung (32,42) enthält und welche auf oder vor der Brillenlinse (16) angeordnet ist.

6. Verfahren nach einem der Ansprüche 1 bis 3, dadurch gekennzeichnet, daß die Brillenlinse (16) durch eine Maske (23) bestrahlt wird, welche die Form der Kennzeichnung (33) und/oder Markierung (43) als Aussparung (32,42) enthält und welche auf der Oberfläche (160) der Brillenlinse (16) abgebildet wird.

7. Verfahren nach Anspruch 6, dadurch gekennzeichnet, daß die Maske (23) verkleinert auf die Oberfläche (160) der Brillenlinse (16) abgebildet wird.

8. Verfahren nach Anspruch 5, dadurch gekennzeichnet, daß die Maske (13,23) aus Metall ist.

9. Brillenlinse mit einer reflexvermindernden Schicht und einer für den Brillenträger praktisch nicht sichtbaren Kennzeichnung und/oder Markierung, dadurch gekennzeichnet, daß die Kennzeichnung (33) und/oder Markierung (43) in der reflexvermindernden Schicht in Form von mindestens einem aus dieser Schicht durch einen Eximer-Laser (11) abgetragenen Bereich enthalten ist, und daß in diesem Bereich von der reflexvermindernden Schicht nur ein so geringer Teil abgetragen ist, daß eine derartige Störung der Interferenzbedingung auftritt, daß die Kennzeichnung (33) und/oder Markierung (43) nur im reflektierten Licht sichtbar ist.

10. Brillenlinse ohne eine reflexvermindernde Schicht und mit einer für den Brillenträger praktisch nicht sichtbaren Kennzeichnung und/ oder Markierung, die durch Abtragung der Oberfläche der Linse durch Bestrahlung mit einem Excimer-Laser in einem Bereich in Form der Kennzeichnung (33) und/oder Markierung (43) gebildet ist, dadurch gekennzeichnet, daß in diesem Bereich von der Oberfläche der Brillenlinse eine nur so geringe Schicht abgetragen ist, daß die Kennzeichnung und/oder Markierung als Hauchzeichen zu erkennen ist.

## Claims

1. A method for producing an identification and/or a marking on a spectacle lens without anti-reflection coating whereby areas on the surface of the spectacle lens in form of identifications and/or markings are radiated with an excimer laser characterized in that only a so small layer of the surface (160) of the spectacle lens (16) is removed that the identification (33) and/or the marking (43) is recognizable as a breath mark.

2. A method for producing an identification and/or a marking on a spectacle lens with anti-reflection coating whereby areas on the surface of the spectacle lens in form of identifications and/or markings are radiated with an excimer laser characterized in that only a so small layer is removed from the anti-reflection coating the interference condition is disturbed in the way that the identification (33) and/or the marking (43) is recognizable only in reflected light.

3. A method of claim 1 or 2 characterized in that the layer removed is around 0,1 »m.

4. A method as claimed in any of the claims 1 to 3 characterized in that for the irradiation a pulse or a plurality of pulses at a wavelength of approximately 193 nm is used.

5. A method as claimed in any of the claims 1 to 4 characterized in that the spectacle lens (16) is irradiated through a mask (13) containing cutouts (32, 42) having the form or the identification (33) and/or the marking (43) and wherein said mask (13) is arranged ontop or infront of the spectacle lens (16).

6. A method as claimed in any of the claims 1 to 3 characterized in that the spectacle lens (16) is irradiated through a mask (23) containing cutouts (32, 42) having the form or the identification (33) and/or the marking (43) and wherein said mask (23) is imaged onto the surface (160) of the spectacle lens (16).

7. A method of claim 6 characterized in that the mask (23) being imaged onto the surface (160) of the spectacle lens (16) at a reduced size.

8. A method of claim 5 characterized in that the mask (13, 23) being made of metal.

9. A spectacle lens with anti-reflection coating having an identification and/or marking not visible under practical conditions for the person wearing the spectacles characterized in that the identification (33) and/or the marking (43) is enclosed in the anti-reflection coating in form of a layer removed with an excimer laser (11), whereby from the anti-reflection coating only a so small portion is removed, that a disturbtion of the interference condition appear so that the identification (33) and/or the marking (43) is recognizable only in reflected light.

10. A spectacle lens without anti-reflection coating having an identification and/or marking not visible under practical conditions for the person wearing the spectacles by removement of the surface of the spectacle lens by an excimer laser in an area having the form of an identification (33) and/or a marking (43) characterized in that in this area of the surface of the spectacle lens only a so small layer is removed that the identification (33) and/or the marking (43) is recognizable as a breath mark.

## Revendications

1. Procédé de production d'une identification et/ou d'un marquage sur un verre de lunette dépourvu de couche anti-reflets, dans lequel on illumine des régions de la surface du verre de lunette avec un laser excimer, selon la forme de l'identification et/ou du marquage, caractérisé en ce qu'on n'enlève de la surface (160) du verre de lunette (16) qu'une couche suffisamment mince pour que l'identification (33) et/ou le marquage (43) soient décelables sous la forme d'un signe visible au souffle.

2. Procédé de production d'une identification et/ou d'un marquage sur un verre de lunette portant une couche anti-reflets, dans lequel on illumine des régions de la surface du verre de lunette avec un laser excimer, selon la forme de l'identification et/ou du marquage, caractérisé en ce qu'on n'enlève de la couche anti-reflets qu'une partie suffisamment faible pour qu'il se produise une destruction de la condition d'interférence telle que l'identification (33) et/ou le marquage (43) ne soient visibles qu'en lumière réfléchie.

3. Procédé selon la revendication 1 ou 2, caractérisé en ce que l'enlèvement de la couche est d'environ 0,1 »m.

4. Procédé selon une des revendications 1 à 3, caractérisé en ce que l'illumination s'effectue au moyen d'une impulsion ou de plusieurs impulsions, et avec une longueur d'onde d'environ 193 nm.

5. Procédé selon une des revendications 1 à 4, caractérisé en ce que le verre de lunette (16) est illuminé à travers un masque (13) qui présente la forme de l'identification (33) et/ou du marquage (43) sous la forme d'ajours (32, 42) et qui est disposé sur le verre de lunette (16) ou en avant de ce verre.

6. Procédé selon une des revendications 1 à 3, caractérisé en ce que le verre de lunette (16) est illuminé à travers un masque (23) qui présente la forme de l'identification (33) et/ou du marquage (44) sous la forme d'ajours (32, 42), et qui forme son image sur la surface (160) du verre de lunette (16).

7. Procédé selon la revendication 6, caractérisé en ce que le masque (23) forme son image sur la surface (160) du verre de lunette (16) avec réduction.

8. Procédé selon la revendication 5, caractérisé en ce que le masque (13, 23) est en métal.

9. Verre de lunette muni d'une couche anti-reflets et d'une identification et/ou d'un marquage pratiquement invisibles pour le porteur des lunettes, et caractérisé en ce que l'identification (33) et/ou le marquage (43) sont contenus dans la couche anti-reflets sous la forme d'au moins une région qui est enlevée de cette couche par un laser excimer (11), et en ce que, dans cette région, on n'a enlevé de la couche anti-reflets qu'une partie suffisamment petite pour qu'il se produise une destruction de la condition d'interférence telle que l'identification (33) et/ou le marquage (43) ne soient visibles qu'en lumière réfléchie.

10. Verre de lunette dépourvu de couche anti-reflets et portant une identification et/ou un marquage pratiquement invisibles pour le porteur de lunettes, qui sont formés par enlèvement de la surface du verre par illumination au moyen d'un laser excimer dans une région présentant la forme de l'identification (33) et/du marquage (43), caractérisé en ce que, dans cette région, on n'a enlevé de la surface du verre qu'une couche suffisamment petite pour que l'identification et/ou le marquage puissent être décelés sous la forme d'un signe visible au souffle.
